# EUROPEAN PATENT APPLICATION

(11) **EP 3 406 352 A1**
(43) Date of publication of application: **28.11.2018**
(21) Application number: 18169512.3
(22) Date of filing: 26.04.2018
(51) Int. Cl.: B05D 3/06, B29C 35/08

(54) **LIGHTING DEVICE, PARTICULARLY FOR POLYMERIZATION, AND SYSTEM HAVING SUCH A LIGHTING DEVICE**

(30) Priority: 22.05.2017 IT 201700054965
(71) Applicant: Elmag S.P.A., 20852 Villasanta (MB) (IT)
(72) Inventor: VALTORTA, Gloria, 20852 VILLASANTA (MB) (IT); FINETTI, Roberto, 20852 VILLASANTA (MB) (IT)
(74) Representative: Tiburzi, Andrea

(57) **Abstract**

The present invention relates to a lighting device (1) for the polymerization of paints, resins, glues, inks and the like, intended to illuminate a workpiece moving along a feed direction (A), comprising at least one support plate (2', 2") on which a plurality of LEDs (3) are placed, preferably of ultraviolet rays type, said support plate comprising electrical connection means for powering said LEDs (3), having at least one first node (41) and at least one second node (42), and a plurality of branches (43), each one having its ends connected to said first node (41) and said second node (42), and along each one of which one or more of said LEDs (3) are connected in series, each of said branches (43) being oriented along a relevant second direction forming an angle greater than 0° and less than or equal to 90° with respect to said feed direction (A) of said workpiece to be treated by lighting.

The present invention also relates to a system (6) for the polymerization of paints, resins, glues, inks and the like.

## Description

The present invention relates to a lighting device, particularly for polymerization, and system having such a lighting device.

More specifically, the invention relates to a lighting device, in particular for the polymerization of paints, resins, glues and inks, designed and manufactured in particular to allow the elimination or the limitation of any machine stops in case of failures.

In the following the description will be directed to the application of UV irradiation for the polymerization of paints, resins, glues and inks, but it is clear that the same should not be considered limited to this specific use.

As is well known currently instead of the traditional fluorescent tube, which, according to its width covers a specific passage opening for the parts to be coated with the coating paint, LED (Light Emitting Diode) systems generate a predefined emission window, placing side-by-side in width and in length a certain number of point or conical emission UV LEDs.

The set of these LEDs is commonly defined in the field as c.o.b., *chip on board*, and in the following it will also be called LED matrix. The side-by-side placing of several LED arrays constitutes a system that is constructed based on the width of the desired working area.

The different LEDs belonging to an array of LEDs are powered and connected together according to suitably designed electrical circuits.

Typically, LED arrays for UV polymerization have connection circuits, which provide for different rows of LEDs connected in series and in parallel with each other, positioned parallel to the feed direction of the material that is moved underneath the LED array during the polymerization.

The typical solution of the known art described above has several drawbacks.

In particular, in case of a row or branch of LEDs is interrupted, there would be an emission "hole" in the irradiation light on the width of the working area.

This could probably create polymerization defects and waste of treated material, before the electrical damage of the LED matrix is such that it can be detected by a typical diagnostic check.

Moreover, when a row of LEDs were interrupted, the excess current would be absorbed by the surrounding rows, worsening the emission uniformity and therefore the irradiation on the opening passing through the system.

Finally, the UV LED matrix of this type have fewer LEDs connected in series with respect to the number of LEDs arranged in parallel. This penalizes the uniformity of the distribution of the current between the various LEDs and therefore the uniformity of the radiation emission.

It is apparent that this procedure is burdensome also in economic terms, because there is the risk that the breaking of even a single LED of the LED matrix may not allow the power supply of an entire row or branch of LEDs, not allowing the matrix itself to illuminate uniformly and, therefore, requiring a machine stop, reducing the productivity of the system.

In light of the above, it is therefore an object of the present invention to propose a lighting device, in particular for polymerization, capable of overcoming the limits of the prior art.

It is therefore specific object of the present invention a lighting device for the polymerization of paints, resins, glues, inks and the like, intended to illuminate a workpiece moving along a feed direction, comprising at least one support plate on which a plurality of LEDs are placed, preferably of ultraviolet rays type, said support plate comprising electrical connection means for powering said LEDs, having at least one first node and at least one second node, and a plurality of branches, each one having its ends connected to said first node and said second node, and along each one of which one or more of said LEDs are connected in series, each of said branches being oriented along a relevant second direction forming an angle greater than 0° and less than or equal to 90° with respect to said feed direction of said workpiece to be treated by lighting.

Always according to the invention, said branches may be arranged parallel to each other.

Still according to the invention, said branches may be all arranged transversely with respect to said feed direction of said workpiece to be treated by lighting.

Further according to the invention, on each branch the same number of LEDs of the other branches may be connected.

Advantageously according to the invention, said LEDs may be ultraviolet light emission type.

Preferably according to the invention, said device may comprise two or more support plates arranged side by side.

Always according to the invention, said first node may be connected to a respective electrical terminal and said second node may be connected to a respective electrical terminal.

It is further object of the present invention a system for the polymerization of paints, resins, glues, inks and the like, comprising a base, a worktable, arranged above said base, a conveyor belt, for moving materials, such as pieces or continuous strips, to be treated along said worktable, and a top cover, under which the workpieces pass moved by said conveyor belt, characterized in that it comprises a lighting device according to any one of the preceding claims, installed on said upper cover, for the illumination of said moving materials.

Always according to the invention said system may comprise sensor means, such as amperemeters and the like, operably connected to said branches of said at least one support plate of said lighting device adapted to detect the current flowing through said branches, and a control logic unit, operatively connected to said sensor means, configured to: generating a signal of correct operation, in case of the average intensity threshold of current flowing in said branches is less than or equal to a first predefined threshold; generating a warning signal for over-supplying, in the case of the average intensity of current flowing in said branches is greater than said first predefined threshold and less than or equal to a second predefined threshold; and generating a stop signal, in case of the average intensity of current flowing in said branches is greater than said second predefined threshold.

Still according to the invention, said control logic unit may be configured to interrupt the operation of said system as a result of the generation of said stop signal.

Further according to the invention, said system may comprise an interface connected to said control logic unit and having a display and a control keypad, and said control logic unit may be configured to report said for over-supplying warning signal by means of said display.

Advantageously according to the invention, said system may comprise a power source connected to said at least one first node and a second node, for feeding said LEDs, and said control logic unit may be operatively connected to said power source, so that the latter delivers the power according to a square wave signal with a predetermined duty-cycle, said control logic unit may be configured so as to modify the duty cycle of said power source proportionally if the current average intensity flowing in said branches is greater than said first predefined threshold and less than or equal to a second predefined threshold and if the current average intensity flowing in said branches is greater than said second predefined threshold, due to the break of one or more LEDs.

The present invention will be now described, for illustrative but not limitative purposes, according to its preferred embodiments, with particular reference to the figures of the enclosed drawings, wherein:
figure 1 shows a lighting device for polymerization according to the prior art;
figure 2 shows a lighting device for polymerization according to the present invention;
figure 3 shows the electric schematic of the lighting device according to claim 2;
figure 4 shows a top view of a plant for the treatment of elements which includes the device according to the present invention;
figure 5 shows a side view of a system according to figure 4;
figure 6 shows a functional block diagram of the connection of a logic control unit.

In the various figures, similar parts will be indicated by the same reference numbers.

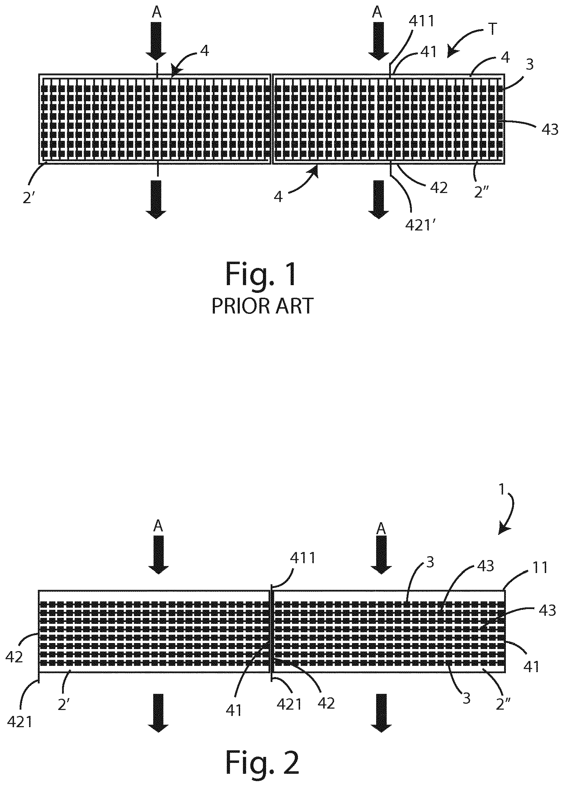

With reference to figure 1, a lighting device 1 according to the prior art is observed, comprising a first 2' and a second 2" support plate, arranged side-by-side, on which LEDs 3 of the ultraviolet or UV ray type are placed, arranged in a matrix.

Electrical connection means are arranged on said plates 2' and 2" for supplying said LEDs 3.

In particular, each of said electrical connecting means 4 comprises a first node 41, connected to a respective electrical terminal 411, and a second node 42, connected to a respective electrical terminal 421.

Said first 41 and second 42 node are connected by parallel branches 43, on each one of which a plurality of LED diodes 3 are connected in series.

In particular, on each branch 43 the same number of LEDs 3 of the other branches 43 is connected.

Moreover, said branches 43 are oriented according to the feed direction A of the piece to be treated by lighting.

As can be seen, when a power supply is applied to the electrical terminals 411 and 421, respectively of said first and second knots 41 and 42, the branches 43 of the matrix are supplied in parallel.

In case of a LED 3 of any branch 43 should break, causing an open circuit in the branch 43 in which it is located, also the other LEDs 3 of said branch 43 would no longer be powered, causing, as mentioned above, a deficiency and especially a non-uniform illumination of the surface to be treated.

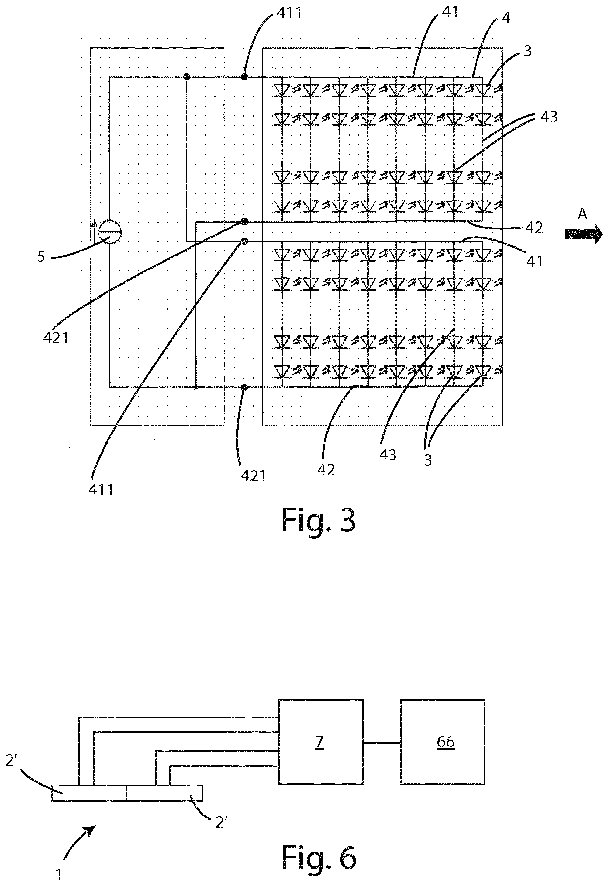

With reference now to figures 2 and 3, a lighting device 1 is observed, particularly for polymerization, according to the present invention.

In this case, on said first 41 and second 42 node are always connected by parallel branches 43, on each of which a plurality of LED diodes 3 are connected in series.

On each branch 43, also in this case, the same number of LEDs 3 of the other branches 43 is connected. However, said branches 43 are transversely oriented with respect to the feed direction A of the piece to be treated by lighting.

The lighting device 1 is supplied by a power supply 5.

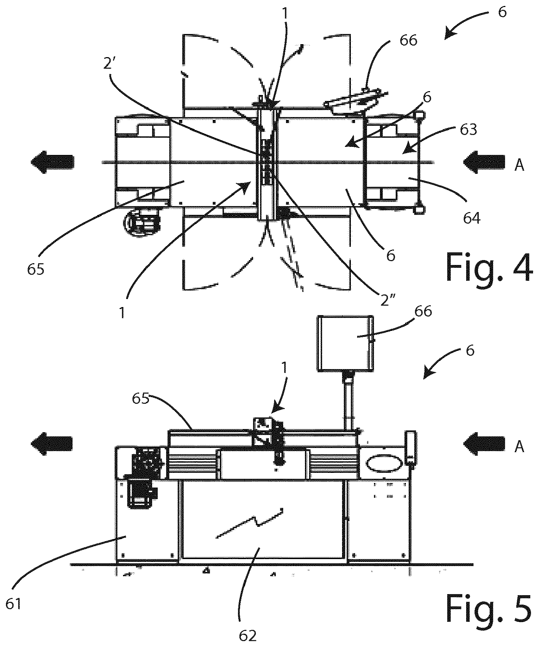

Figures 4 and 5 show a system 6, in which the lighting device 1 is installed.

In particular, said system 6 comprises a base 61, an electric supply panel 62, contained in the base 61, a work surface 63, arranged above said base 61, provided with a conveyor belt 64, for moving pieces (not shown in the figures) to be treated.

Said system 6 also comprises an upper cover 65, under which the work pieces pass.

The illumination device 1 is arranged in said upper cover 65. In this way, when the LEDs 3 illuminate the pieces to be processed by UV radiation, they are protected from the surrounding light radiation allowing an optimal polymerization.

The system 6 also comprises an interface 66, provided with a display and a control keypad.

Referring also to figure 6, it is observed that the power supply of each of said first 2' and second 2" support plate of said lighting device 1 is connected to a control logic unit 7, in its turn connected to said interface 66, which controls the operation of the system 6 as better described below.

The operation of the lighting device 1 described above is as follows.

When the power supply source 5 is activated by said logic control unit 7, for each LED matrix 2' or 2" the supply current flows distributing substantially uniformly in the branches 43 of each of them supplying the LEDs 3, which can thus illuminate the pieces to be worked, which meanwhile run on the underlying conveyor belt 64.

In case of a LED 3 breaks, causing the open circuit of the respective branch 43, an emission "hole" in the irradiation light over the entire width of the working area would be avoided, thus limiting possible polymerization defects and waste on the treated material.

Moreover, when a branch 43 of LED 3 is interrupted, or is an open circuit, the excess current would naturally be distributed on the other branches 43 of the respective support plate 2' or 2", thus temporarily compensating the emission drop and allowing the central control unit to detect the failure, so as to signal it in the most appropriate way.

The detection of the defect is generally only possible after that a predefined number of LEDs 3 are faulty, so as to allow the detection of the distribution failure with sensor means, which in the embodiment at issue are amperemeters operatively connected to said control logic unit 7 (not shown in the figures) and arranged on the branches 43 of each support plate 2' or 2" of said lighting device 1.

When the fault is detected, the control unit 7 sends a warning signal, displaying it on the display of the interface 66, so as to highlight the operating anomaly, without however stopping the system, until the natural compensation of the current distribution on a smaller number of branches 43 does not exceed the maximum current that each branch 43 can withstand.

On the other hand, when the compensation is no longer sufficient to supply the branches 43 in which at least one LED 3 has failed, since it has already reached the maximum current for each branch 43, then the control unit 7 stops all the system 6 due to malfunction. The control unit 7, therefore, is configured to generate the following signals:
- signal for correct operation if the threshold of the average current intensity flowing in said branches 43 is less than a first predefined threshold;
- warning signal for over-feeding without production stop, since the compensation in power supply on the branches 43 of the first 2' or second 2" support plate of the lighting device 1 is capable of guaranteeing the same power level for the correct operation of the lighting device 1 itself. In this case, the system 6 can continue to operate, not slowing down the machining process and maintaining a high production standard at the same time. At the same time, then, the user who detects the warning signal can organize maintenance operations; and
- stop signal, thus stopping the system 6, as it is no longer possible to over-feed the branches 43 in compensation and to continue operating the lighting device 1 would cause a production defect.

In a further embodiment, the control unit 7, which controls the power source 5 of the LEDs 3, can also provide for the generation of a quadratic signal with an appropriate duty cycle.

In this way, the LEDs 3 would be powered by a high frequency quadratic current.

In case of there were malfunctions in the lighting device 1, due to the breaking of one or more LEDs 3 with the interruption of one or more branches 43, the central control unit 7 can modify the duty-cycle of the power supply signal, modifying the average value of the current fed into each support plate 2' or 2" to power the LEDs 3.

An advantage of the present invention is that of obtaining a greater number of LEDs connected in series with respect to the prior art, thus favoring the uniformity of distribution of the current between the various LEDs and the uniformity emission.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Lighting device (1) for the polymerization of paints, resins, glues, inks and the like, intended to illuminate a workpiece moving along a feed direction (A), comprising
at least one support plate (2', 2") on which a plurality of LEDs (3) are placed, preferably of ultraviolet rays type, said support plate comprising
electrical connection means for powering said LEDs (3), having at least one first node (41) and at least one second node (42), and
a plurality of branches (43), each one having its ends connected to said first node (41) and said second node (42), and along each one of which one or more of said LEDs (3) are connected in series, each of said branches (43) being oriented along a relevant second direction forming an angle greater than 0° and less than or equal to 90° with respect to said feed direction (A) of said workpiece to be treated by lighting.

2. Device (1) according to claim 1, **characterized in that** said branches (3) are arranged parallel to each other.

3. Device (1) according to any one of the preceding claims, **characterized in that** said branches (43) are all arranged transversely with respect to said feed direction (A) of said workpiece to be treated by lighting.

4. Device (1) according to any one of the preceding claims, **characterized in that** on each branch (43) the same number of LEDs (3) of the other branches (43) is connected.

5. Device (1) according to any one of the preceding claims, **characterized in that** said LEDs (3) are ultraviolet light emission type.

6. Device (1) according to any one of the preceding claims, **characterized in that** it comprises two or more support plates (2', 2") arranged side by side.

7. Device (1) according to any one of the preceding claims, **characterized in that** said first node (41) is connected to a respective electrical terminal (411) and said second node (42) is connected to a respective electrical terminal (421).

8. System (6) for the polymerization of paints, resins, glues, inks and the like, comprising
a base (61),
a worktable (63), arranged above said base (61),
a conveyor belt (64), for moving materials, such as pieces or continuous strips, to be treated along said worktable (63), and
a top cover (65), under which the workpieces pass moved by said conveyor belt (64),
**characterized in that** it comprises a lighting device (1) according to any one of the preceding claims, installed on said upper cover (65), for the illumination of said moving materials.

9. System (6) according to claim 8, **characterized in that** it comprises
sensor means, such as amperemeters and the like, operably connected to said branches (43) of said at least one support plate (2', 2") of said lighting device (1) adapted to detect the current flowing through said branches (43), and
a control logic unit (7), operatively connected to said sensor means, configured to:
- generating a signal of correct operation, in case of the average intensity threshold of current flowing in said branches (43) is less than or equal to a first predefined threshold;
- generating a warning signal for over-supplying, in the case of the average intensity of current flowing in said branches (43) is greater than said first predefined threshold and less than or equal to a second predefined threshold; and
- generating a stop signal, in case of the average intensity of current flowing in said branches (43) is greater than said second predefined threshold.

10. System (6) according to claim 9, **characterized in that** said control logic unit (7) is configured to interrupt the operation of said system (1) as a result of the generation of said stop signal.

11. Installation (6) according to any one of claims 9 or 10, **characterized**
**in that** it comprises an interface (66) connected to said control logic unit (7) and having a display and a control keypad, and
**in that** said control logic unit (7) is configured to report said for over-supplying warning signal by means of said display.

12. System (6) according to any one of claims 9 - 11, **characterized**
**in that** it comprises a power source (5) connected to said at least one first node (41) and a second node (42), for feeding said LEDs (3), and
**in that** said control logic unit (7) is operatively connected to said power source (5), so that the latter delivers the power according to a square wave signal with a predetermined duty-cycle,
said control logic unit (7) is configured so as to modify the duty cycle of said power source (5) proportionally if the current average intensity flowing in said branches (43) is greater than said first predefined threshold and less than or equal to a second predefined threshold and if the current average intensity flowing in said branches (43) is greater than said second predefined threshold, due to the break of one or more LEDs (3).
